(19) Europäisches Patentamt
European Patent Office
Office européen des brevets

(11) **EP 4 152 248 A1**

(12) **EUROPEAN PATENT APPLICATION**

(43) Date of publication:
**22.03.2023 Bulletin 2023/12**

(21) Application number: **21197744.2**

(22) Date of filing: **20.09.2021**

(51) International Patent Classification (IPC):
***G06T 7/00*** *(2006.01)*

(52) Cooperative Patent Classification (CPC):
**G06T 7/0012;** G06T 2207/20016;
G06T 2207/20081; G06T 2207/30004

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
• **KROENKE, Sven**
  **Eindhoven (NL)**
• **MAACK, Hanss-Ingo**
  **Eindhoven (NL)**
• **VON BERG, Jens**
  **Eindhoven (NL)**

(74) Representative: **Philips Intellectual Property &
Standards
High Tech Campus 52
5656 AG Eindhoven (NL)**

(54) **MEDICAL IMAGE ANALYSIS SYSTEM**

(57)    The present invention relates to an apparatus (10) for training a medical image analysis algorithm, comprising:
- an input unit (20); and
- a processing unit (30).

The input unit is configured to receive a medical image of a body part of a patient. The input unit is configured to provide the medical image to the processing unit. The processing unit is configured to generate a modified medical image. The generation comprises a modification of two or more spatial frequency bands associated with the medical image. The processing unit is configured to train a medical image analysis machine learning algorithm comprising utilization of the modified medical image.

**FIG. 7**

**Description**

FIELD OF THE INVENTION

The present invention relates to an apparatus for training a medical image analysis algorithm, a medical image generator, a medical image analysis system, a method of training a medical image analysis algorithm, a medical image generation method, a medical image analysis method, as well as to a computer program element and a computer readable medium.

BACKGROUND OF THE INVENTION

Supervised training of neural networks for classification, segmentation or regression of medical images, such as X-ray images and computer-tomographic (CT) images, requires a huge amount of training data for preventing overfitting. This is not only because of the anatomical and pathological variability of images of a certain exam-type but also because of the multitude of prevalent images styles. The image style is impacted by the used imaging system, parameter choice (e.g. voltage and power) as well as user-dependent or manufacturer-dependent pre- and post-processing preferences. In particular, if a neural network shall be applied to medical images stemming from various manufacturers, style-invariance is a prerequisite for a good generalizability. Since style-invariance is not integrated into state-of-the-art neural-network architectures, it has to be learned during training. However, gathering the appropriate required training medical imagery is time-consuming, or even impossible.

There is a need to resolve this issue.

SUMMARY OF THE INVENTION

It would be advantageous to have an improved medical image analysis modality. The object of the present invention is solved with the subject matter of the independent claims, wherein further embodiments are incorporated in the dependent claims. It should be noted that the following described aspects and examples of the invention apply to the apparatus for training a medical image analysis algorithm, the medical image generator, the medical image analysis system, the method of training a medical image analysis algorithm, the medical image generation method, the medical image analysis method, as well as to the computer program element and the computer readable medium.

In a first aspect, there is provided an apparatus for training a medical image analysis algorithm, comprising:

- an input unit; and
- a processing unit.

The input unit is configured to receive a medical image of a body part of a patient. The input unit is configured to provide the medical image to the processing unit. The processing unit is configured to generate a modified medical image. The generation comprises a modification of two or more spatial frequency bands associated with the medical image. The processing unit is configured to train a medical image analysis machine learning algorithm comprising utilization of the modified medical image.

In this manner, a medical image analysis algorithm can be trained on a reduced real image data set, where multi-scale data augmentation is used to generate what can be an arbitrary number of synthetic images that are realistic with respect to a real input image. Not only are fewer real images required, but the synthetic images reproduce imagery that would have been acquired with different image acquisition settings and even reproduce imagery that would be acquired by different image acquisition units. Thus, the analysis algorithm trained on all of this imagery becomes more robust and accurate, taking into account different image acquisition settings.

In an example, the processing unit is configured to generate a scaled image set comprising a plurality of scaled images, wherein the generation comprises utilization of the medical image, wherein each scaled image compromises a representation of a spatial frequency in the medical image, and wherein the representation of the spatial frequency in each of the plurality of scaled images is different. The processing unit is configured also to generate a modified scaled image set from the scaled image set comprising modification of two or more scaled images of the plurality of scaled images. The processing unit is configured to generate the modified medical image comprising utilization of the modified scaled image set.

Thus, the medical image of the body part of the patient is used to generate a plurality of synthetic medical images, that are similar to the medical image but different to each other, and that can then be used to train a medical image analysis machine learning algorithm.

In an example, modification of the two or more of the plurality of scaled images comprises modification of the representation of the spatial frequency comprised within each of the two or more scaled images.

In an example, modification of the two or more of the plurality of scaled images comprises modification of the representation of the spatial frequency comprised within each of the two or more scaled images with a random modification factor.

In an example, the generation of the modified scaled image set comprises a modification of the plurality of scaled images.

In an example, the modification of the plurality of scaled images comprises a modification of the representation of the spatial frequency comprised within each of the plurality scaled images with a modification factor that increases with spatial frequency from one scaled image to the next scaled image.

In an example the modification of the plurality of scaled images comprises a modification of the representation of the spatial frequency comprised within each of the plurality scaled images with a modification factor that decreases with spatial frequency from one scaled image to the next scaled image. In a second aspect, there is provided a medical image generator, comprising:

- an input unit; and
- a processing unit.

The input unit is configured to receive a medical image of a body part of a patient. The input unit is configured to provide the medical image to the processing unit. The processing unit is configured to generate a modified medical image. The generation comprises a modification of two or more spatial frequency bands associated with the image.

Thus, a limited number of real images can be utilized to generate synthetic imagery, that is realistic, that can be used to train an image analysis algorithm.

In a third aspect, there is provided a medical image analysis system, comprising:

- an input unit; and
- a processing unit.

The input unit is configured to receive an examination medical image of a body part of a patient. The input unit is configured to provide the examination medical image to the processing unit. The processing unit is configured to analyse the body part of the patient. The analysis comprises interrogation of the examination medical image with a trained machine learning algorithm. The machine learning algorithm was trained comprising utilization of at least one modified medical image generated by the generator according to the second aspect.

In this way, analysis of medical imagery is improved, because the machine learning algorithm analysing the imagery is trained on a comprehensive data set of imagery that can reproduce different image acquisition settings and acquisition by different acquisition units of the same type (thus different X-ray units or different CT units).

Thus, imagery is generated that in effect mimics different image styles, dependent upon operator set-up for example, and mimics acquisition by units from different vendors and mimics different post-processing configurations. The machine learning algorithm that is then trained on this rich and varied dataset of imagery is then more robust at analysing imagery acquired by acquisition units that are set up differently by different operators, or from different vendors etc.

In a fourth aspect, there is provided a method of training a medical image analysis algorithm, comprising:

receiving by an input unit a medical image of a body part of a patient;
providing by the input unit the medical image to a processing unit; generating by the processing unit a modified medical image, wherein the generating comprises a modification of two or more spatial frequency bands associated with the medical image; and
training by the processing unit a medical image analysis machine learning algorithm comprising utilizing the modified medical image.

In an example, the method comprises:

generating by the processing unit a scaled image set comprising a plurality of scaled images, wherein the generating comprises utilizing the medical image, wherein each scaled image compromises a representation of a spatial frequency in the medical image, and wherein the representation of the spatial frequency in each of the plurality of scaled images is different;
generating by the processing unit a modified scaled image set from the scaled image set, wherein the generating comprises modifying two or more scaled images of the plurality of scaled images; and
generating by the processing unit the modified medical image comprising utilizing the modified scaled image set.

In a fifth aspect, there is provided a medical image generation method, comprising:

receiving by an input unit is configured a medical image of a body part of a patient; and
generating by the processing unit a modified medical image, wherein the generating comprises a modification of two or more spatial frequency bands associated with the medical image

In an example, the method comprises:

generating by the processing unit a scaled image set comprising a plurality of scaled images, wherein the generating comprises utilizing the medical image, wherein each scaled image compromises a representation of a spatial frequency in the medical image, and wherein the representation of the spatial frequency in each of the plurality of scaled images is different;
generating by the processing unit a modified scaled image set from the scaled image set, wherein the generating comprises modifying two or more scaled images of the plurality of scaled images; and
generating by the processing unit the modified medical image comprising utilizing the modified scaled image set

In a sixth aspect, there is provided a medical image analysis method, comprising:

receiving by an input unit an examination medical image of a body part of a patient;

providing by the input unit the examination medical image to a processing unit;

analysing by the processing unit the body part of the patient, and wherein the analysing comprises interrogating the examination medical image with a trained machine learning algorithm; wherein, the machine learning algorithm was trained comprising utilization of at least one modified medical image generated by the method according to the fifth aspect.

According to another aspect, there is provided a computer program element controlling one or more of the apparatuses, generators, systems as previously described which, if the computer program element is executed by a processor, is adapted to perform the associated methods as previously described.

According to another aspect, there is provided a computer readable medium having stored the computer element as previously described.

The computer program element can for example be a software program but can also be a FPGA, a PLD or any other appropriate digital means.

Advantageously, the benefits provided by any of the above aspects equally apply to all of the other aspects and vice versa.

The above aspects and examples will become apparent from and be elucidated with reference to the embodiments described hereinafter.

BRIEF DESCRIPTION OF THE DRAWINGS

Exemplary embodiments will be described in the following with reference to the following drawing:

Fig. 1 shows a schematic representation of an example of an apparatus for training a medical image analysis algorithm;

Fig. 2 shows a schematic representation of an example of a medical image generator;

Fig. 3 shows a schematic representation of an example of a medical image analysis system;

Fig. 4 shows an example of a method for training a medical image analysis algorithm;

Fig. 5 shows an example of a medical image generation method;

Fig. 6 shows an example of a medical image analysis method;

Fig. 7 shows an input image (at the left subplot) and sequence of Laplace-pyramid bands scaled to the original image size (the other subplots),

Fig. 8 shows an input image (at the left subplot) and eight augmented versions obtained by random, monotonously increasing pre-factors of the Laplace bands in the pyramid reconstruction (the other subplots);

Fig. 9 shows an input image (at the left subplot) and eight augmented versions obtained by random, monotonously decreasing pre-factors of the Laplace bands in the pyramid reconstruction (the other subplots); and

Fig. 10 shows an input image (at the left subplot) and eight augmented versions obtained by random pre-factors of the Laplace bands in the pyramid reconstruction (the other subplots).

DETAILED DESCRIPTION OF EMBODIMENTS

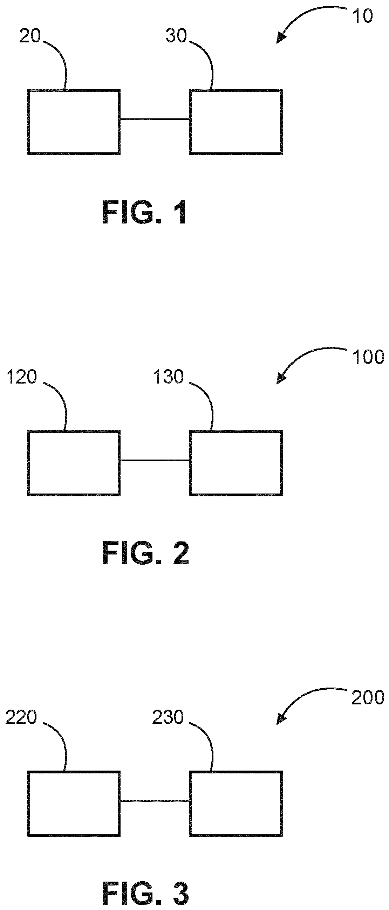

Fig. 1 shows an example of an apparatus 10 for training a medical image analysis algorithm. The apparatus comprises an input unit 20, and a processing unit 30. The input unit is configured to receive a medical image of a body part of a patient. The input unit is configured to provide the medical image to the processing unit. The processing unit is configured to generate a modified medical image comprising a modification of two or more spatial frequency bands associated with the medical image. The processing unit is configured to train a medical image analysis machine learning algorithm comprising utilization of the modified medical image.

In an example, the medical image is an X-ray image.

In an example, the medical image is an CT image.

In an example, the machine learning algorithm is a neural network.

In an example, each scaled image of the two or more scaled images is modified differently.

In an example, the processing unit is configured to train the medical image analysis machine learning algorithm comprising utilization of the medical image.

According to an example, the processing unit is configured to generate a scaled image set comprising a plurality of scaled images. The generation of the scaled image set comprises utilization of the medical image. Each scaled image compromises a representation of a spatial frequency in the medical image, and the representation of the spatial frequency in each of the plurality of scaled images is different. The processing unit is configured to generate a modified scaled image set from the scaled image set. The generation of the modified scaled image set comprises modification of two or more scaled images of the plurality of scaled images. The processing unit is configured to generate the modified medical image comprising utilization of the modified scaled image set.

In an example, each scaled image of the two or more scaled images is modified differently.

In an example, each scaled corresponds to a band of frequencies.

In an example, the scaled image set is a Laplacian pyramid with a number of elements and where each element is scaled image and corresponds to a band of frequencies.

According to an example, the modification of the two or more of the plurality of scaled images comprises modification of the representation of the spatial frequency comprised within each of the two or more scaled images.

According to an example, the modification of the two or more of the plurality of scaled images comprises modification of the representation of the spatial frequency comprised within each of the two or more scaled images with a random modification factor.

In an example, the modification of the spatial frequency comprised within a scaled image comprises modification of an intensity distribution associated with a frequency band of the scaled image.

In an example the modification comprises modification of the intensity distribution associated with the frequency band of the element of the Laplacian pyramid in the modified image.

In an example, the modification of the representation of the spatial frequency comprised within a scaled image comprises modification of an intensity distribution of the scaled image.

In an example the modification comprises modification of the intensity distribution of the elements of the Laplacian pyramid themselves (e.g. by histogram matching to some randomly picked reference).

In an example, the random modification factor comprises a varying weighting factor applied to the different scaled images.

In an example weighting of the elements of the Laplacian pyramid is used as the random modification factor.

According to an example, the generation of the modified scaled image set comprises modification of the plurality of scaled images.

According to an example, the modification of the plurality of scaled images comprises a modification of the representation of the spatial frequency comprised within each of the plurality scaled images with a modification factor that increases with spatial frequency from one scaled image to the next scaled image.

In an example, the modification factor is randomly generated with an expected mean value that increases with spatial frequency from one scaled image to the next scaled image

According to an example, the modification of the plurality of scaled images comprises a modification of the representation of the spatial frequency comprised within each of the plurality scaled images with a modification factor that decreases with spatial frequency from one scaled image to the next scaled image.

In an example, wherein modification factor is randomly generated with an expected mean value that decreases with spatial frequency from one scaled image to the next scaled image.

In an example, the scaled image set comprises a Laplacian pyramid.

In an example, the modified scaled image set is a first modified scaled image set. The processing unit is configured to generate a second modified scaled image set from the scaled image set. The generation of the second modified scaled image set comprises modification of two or more scaled images of the plurality of scaled images. The modification is different to the modification for the generation of the first modified scaled image set. The modified medical image is a first modified medical image. The processing unit is configured to generate a second modified medical image comprising utilization of the second modified scaled image set. The processing unit is configured to train the medical image analysis machine learning algorithm comprising utilization of the second modified medical image.

In an example, each scaled image of the two or more scaled images of the is modified differently to generate the second modified scaled image set.

Fig. 2 shows an example, of a medical image generator 100. The generator 100 comprises an input unit 120, and a processing unit 130. The input unit is configured to receive a medical image of a body part of a patient. The input unit is configured to provide the medical image to the processing unit. The processing unit is configured to generate a modified medical image. The generation comprises a modification of two or more spatial frequency bands associated with the medical image.

In an example, the processing unit is configured to generate a scaled image set comprising a plurality of scaled images. The generation of the scaled image set comprises utilization of the medical image. Each scaled image compromises a representation of a spatial frequency in the medical image, and the representation of the spatial frequency in each of the plurality of scaled images is different. The processing unit is configured to generate a modified scaled image set from the scaled image set. The generation of the modified scaled image set comprises modification of two or more scaled images of the plurality of scaled images. The processing unit is configured to generate the modified medical image comprising utilization of the modified scaled image set.

In an example, the medical image is an X-ray image.

In an example, the medical image is an CT image.

In an example, each scaled image of the two or more scaled images is modified differently.

In an example, each scaled corresponds to a band of frequencies.

In an example, the scaled image set is a Laplacian pyramid with a number of elements and where each element is scaled image and corresponds to a band of frequencies.

In an example, modification of the two or more of the plurality of scaled images comprises modification of the representation of the spatial frequency comprised within each of the two or more scaled images.

In an example, modification of the two or more of the plurality of scaled images comprises modification of the representation of the spatial frequency comprised within each of the two or more scaled images with a random modification factor.

In an example, the modification of the representation of the spatial frequency comprised within a scaled image comprises modification of an intensity distribution associated with a frequency band of the scaled image.

In an example the modification comprises modification of the intensity distribution associated with the frequency band of the element of the Laplacian pyramid in the modified image.

In an example, the modification of the representation of the spatial frequency comprised within a scaled image comprises modification of an intensity distribution of the scaled image.

In an example the modification comprises modification of the intensity distribution of the elements of the Laplacian pyramid themselves (e.g. by histogram matching to some randomly picked reference).

In an example, the random modification factor comprises a varying weighting factor applied to the different scaled images.

In an example weighting of the elements of the Laplacian pyramid is used as the random modification factor.

In an example, the generation of the modified scaled image set comprises a modification of the plurality of scaled images.

In an example, the modification of the plurality of scaled images comprises a modification of the representation of the spatial frequency comprised within each of the plurality scaled images with a modification factor that increases with spatial frequency from one scaled image to the next scaled image.

In an example, the modification factor is randomly generated with an expected mean value that increases with spatial frequency from one scaled image to the next scaled image

In an example, the modification of the plurality of scaled images comprises a modification of the representation of the spatial frequency comprised within each of the plurality scaled images with a modification factor that decreases with spatial frequency from one scaled image to the next scaled image.

In an example, modification factor is randomly generated with an expected mean value that decreases with spatial frequency from one scaled image to the next scaled image.

In an example, the scaled image set comprises a Laplacian pyramid.

In an example, the modified scaled image set is a first modified scaled image set. The processing unit is configured to generate a second modified scaled image set from the scaled image set. The generation of the second modified scaled image set comprises modification of two or more scaled images of the plurality of scaled images. The modification is different to the modification for the generation of the first modified scaled image set. The modified medical image is a first modified medical image, and the processing unit is configured to generate a second modified medical image comprising utilization of the second modified scaled image set.

In an example, each scaled image of the two or more scaled images of the scaled image set is modified differently to generate the second modified scaled image set.

Fig. 3 shows an example of a medical image analysis system 200. The system 200 comprises an input unit 220, and a processing unit 230. The input unit is configured to receive an examination medical image of a body part of a patient. The input unit is configured to provide the examination medical image to the processing unit. The processing unit is configured to analyse the body part of the patient. The analysis comprises interrogation of the examination medical image with a trained machine learning algorithm. The machine learning algorithm was trained comprising utilization of at least one modified medical image generated by the generator as described with respect to Fig. 2.

In an example, analysis of the body part of the patient comprises interrogation of a modified version of the examination medical image with the trained machine learning algorithm, wherein the modified version of the examination medical image was generated by the generator as described with respect to Fig. 2.

Thus, so called "test-time augmentation" is provided. Here the analysis algorithm is applied to both the original image to be analyzed and augmented version(s) thereof. The final prediction is formed by aggregating the predictions for the different input version, which can typically be by taking the average. Thereby, the overall algorithm becomes more robust and less sensitive to variations of the input image characteristic, by in effect averaging the predictions for both the original input and augmented versions thereof.

In an example, the examination medical image is an X-ray image.

In an example, the examination medical image is an CT image.

In an example, the medical image analysis machine learning algorithm is a neural network.

In an example, the medical image analysis machine learning algorithm is trained for automatic disease detection.

In an example, the medical image analysis machine learning algorithm is trained for image segmentation of body parts, for example bones.

In an example, the medical image analysis machine learning algorithm is trained for regression of organ extents, for example foetal head diameter.

In an example, the medical image analysis machine learning algorithm is trained for exam-type or view classification.

In an example, the machine learning algorithm was trained comprising utilization of the medical image.

Thus, a real image can be used to generate one or more synthetic images that are similar to the real image, and these synthetic images are used to train the medical image analysis machine learning algorithm. However, the real image itself can be one of the images that is used directly for training the machine learning algorithm as well.

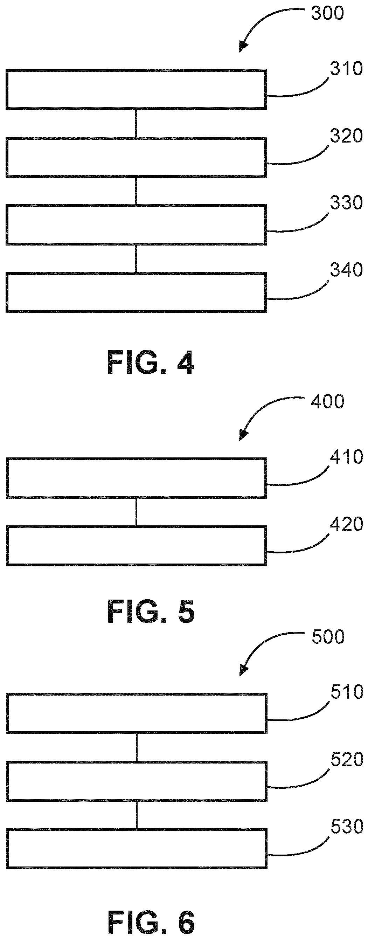

Fig. 4 shows an example of a method 300 of training a medical image analysis algorithm. The method comprises

in a receiving step 310 receiving by an input unit a medical image of a body part of a patient;
in a providing step 320 providing by the input unit the medical image to a processing unit;
in a generating step 330 generating by the processing unit a modified medical image, wherein the generating comprises a modification of two or more spatial frequency bands associated with the medical image; and
in a training step 340 training by the processing unit a medical image analysis machine learning algorithm comprising utilizing the modified medical image.
In an example, the medical image is an X-ray image.
In an example, the medical image is an CT image.
In an example, the machine learning algorithm is a neural network.

In an example, each scaled image of the two or more scaled images is modified differently.

In an example, the processing unit is configured to train the medical image analysis machine learning algorithm comprising utilization of the medical image.

According to an example, the method comprises:

generating by the processing unit a scaled image set comprising a plurality of scaled images, wherein the generating comprises utilizing the medical image, wherein each scaled image compromises a representation of a spatial frequency in the medical image, and wherein the representation of the spatial frequency in each of the plurality of scaled images is different;
generating by the processing unit a modified scaled image set from the scaled image set, wherein the generating comprises modifying two or more scaled images of the plurality of scaled images; and
generating by the processing unit the modified medical image comprising utilizing the modified scaled image set.

In an example, the machine learning algorithm is a neural network.

In an example, each scaled image of the two or more scaled images is modified differently.

In an example, each scaled corresponds to a band of frequencies.

In an example, the scaled image set is a Laplacian pyramid with a number of elements and where each element is scaled image and corresponds to a band of frequencies.

In an example, training the medical analysis machine learning algorithm comprising utilizing the medical image.

In an example, the method comprises modifying the representation of the spatial frequency comprised within each of the two or more scaled images.

In an example, the method comprises modifying the representation of the spatial frequency comprised within each of the two or more scaled images with a random modification factor.

In an example, the modification of the spatial frequency comprised within a scaled image comprises modification of an intensity distribution associated with a frequency band of the scaled image.

In an example the modification comprises modification of the intensity distribution associated with the frequency band of the element of the Laplacian pyramid in the modified image.

In an example, the modification of the representation of the spatial frequency comprised within a scaled image comprises modification of an intensity distribution of the scaled image.

In an example the modification comprises modification of the intensity distribution of the elements of the Laplacian pyramid themselves (e.g. by histogram matching to some randomly picked reference).

In an example, the random modification factor comprises a varying weighting factor applied to the different scaled images.

In an example weighting of the elements of the Laplacian pyramid is used as the random modification factor.

In an example, the method comprises modifying the plurality of scaled images.

In an example, modifying the plurality of scaled images comprises modifying the representation of the spatial frequency comprised within each of the plurality scaled images with a modification factor that increases with spatial frequency from one scaled image to the next scaled image.

In an example, the modification factor is randomly generated with an expected mean value that increases with spatial frequency from one scaled image to the next scaled image

In an example, modifying the plurality of scaled images comprises modifying the representation of the spatial frequency comprised within each of the plurality scaled images with a modification factor that decreases with spatial frequency from one scaled image to the next scaled image.

In an example, the modification factor is randomly generated with an expected mean value that decreases with spatial frequency from one scaled image to the next scaled image.

In an example, the scaled image set comprises a Laplacian pyramid.

In an example, the modified scaled image set is a first modified scaled image set. The method comprises generating by the processing unit a second modified scaled image set from the scaled image set. The generating of the second modified scaled image set comprises modifying two or more scaled images of the plurality of scaled images, wherein the modification is different to the modification for the generating the first modified scaled image set. The modified medical image is also a first modified medical image. The method comprises generating by the processing unit a second modified medical image comprising utilizing the second modified scaled image set. The method comprises training by the processing unit the medical analysis machine learning algorithm comprising utilizing the second modified medical image.

In an example, each scaled image of the two or more scaled images of is modified differently to generate the second modified scaled image set.

Fig. 5 shows an example of a medical image generation method 400. The method 400 comprises:

in a receiving step 410 receiving by an input unit is configured a medical image of a body part of a patient that is provided to a processing unit; and

in a generating step 420 generating by the processing unit a modified medical image, wherein the generating comprises a modification of two or more spatial frequency bands associated with the medical image.

In an example, the medical image is an X-ray image.

In an example, the medical image is an CT image.

According to an example, the method comprises:

generating by the processing unit a scaled image set comprising a plurality of scaled images, wherein the generating comprises utilizing the medical image, wherein each scaled image compromises a representation of a spatial frequency in the medical image, and wherein the representation of the spatial frequency in each of the plurality of scaled images is different;

generating by the processing unit a modified scaled image set from the scaled image set, wherein the generating comprises modifying two or more scaled images of the plurality of scaled images; and

generating by the processing unit the modified medical image comprising utilizing the modified scaled image set

In an example, each scaled image of the two or more scaled images is modified differently.

In an example, each scaled corresponds to a band of frequencies.

In an example, the scaled image set is a Laplacian pyramid with a number of elements and where each element is scaled image and corresponds to a band of frequencies.

In an example, the method comprises modifying the representation of the spatial frequency comprised within each of the two or more scaled images.

In an example, the method comprises modifying the representation of the spatial frequency comprised within each of the two or more scaled images with a random modification factor.

In an example, modifying the representation of the spatial frequency comprised within a scaled image comprises modifying an intensity distribution associated with a frequency band of the scaled image.

In an example the modifying comprises modifying the intensity distribution associated with the frequency band of the element of the Laplacian pyramid in the modified image.

In an example, the modifying the representation of the spatial frequency comprised within a scaled image comprises modifying an intensity distribution of the scaled image.

In an example the modifying comprises modification of the intensity distribution of the elements of the Laplacian pyramid themselves (e.g. by histogram matching to some randomly picked reference).

In an example, the random modification factor comprises a varying weighting factor applied to the different scaled images.

In an example weighting of the elements of the Laplacian pyramid is used as the random modification factor.

In an example, the method comprises modifying the plurality of scaled images.

In an example, modifying the plurality of scaled images comprises modifying the representation of the spatial frequency comprised within each of the plurality scaled images with a modification factor that increases with spatial frequency from one scaled image to the next scaled image.

In an example, the modification factor is randomly generated with an expected mean value that increases with spatial frequency from one scaled image to the next scaled image

In an example, modifying the plurality of scaled images comprises modifying the representation of the spatial frequency comprised within each of the plurality scaled images with a modification factor that decreases with spatial frequency from one scaled image to the next scaled image.

In an example, the modification factor is randomly generated with an expected mean value that decreases with spatial frequency from one scaled image to the next scaled image.

In an example, the scaled image set comprises a Laplacian pyramid.

In an example, the modified scaled image set is a first modified scaled image set. The method comprises generating by the processing unit a second modified scaled image set from the scaled image set, wherein the generating comprises modifying two or more scaled images of the plurality of scaled images, and the modification is different to the modification for the generating the first modified scaled image set. The modified medical image is a first modified medical image. The method comprises generating by the processing unit a second modified medical image comprising utilizing the second modified scaled image set.

In an example, each scaled image of the two or more scaled images of is modified differently to generate the second modified scaled image set.

Fig. 6 shows an example of a medical image analysis method 500. The method 500 comprises:

in a receiving step 510 receiving by an input unit an examination medical image of a body part of a patient;
in a providing step 520 providing by the input unit the examination medical image to a processing unit;
in an analysing step 530 analysing by the processing unit the body part of the patient, and wherein the analysing comprises interrogating the examination medical image with a trained machine learning algorithm; and
wherein, the machine learning algorithm was trained comprising utilization of at least one modified medical image generated by the method as described with respect to Fig. 5.

In an example, analysing the body part of the patient comprises interrogating a modified version of the examination medical image with the trained machine learning algorithm, wherein the modified version of the examination medical image was generated by the method as described with respect to Fig. 5.

In an example, the medical image is an X-ray image.

In an example, the medical image is an CT image.

In an example, the medical image analysis machine learning algorithm is a neural network.

In an example, the medical image analysis machine learning algorithm was trained comprising utilization of the medical image.

In an example, the medical image analysis machine learning algorithm is trained for automatic disease detection.

In an example, the medical image analysis machine learning algorithm is trained for image segmentation of body parts, for example bones.

In an example, the medical image analysis machine learning algorithm is trained for regression of organ extents, for example foetal head diameter.

In an example, the medical image analysis machine learning algorithm is trained for exam-type or view classification.

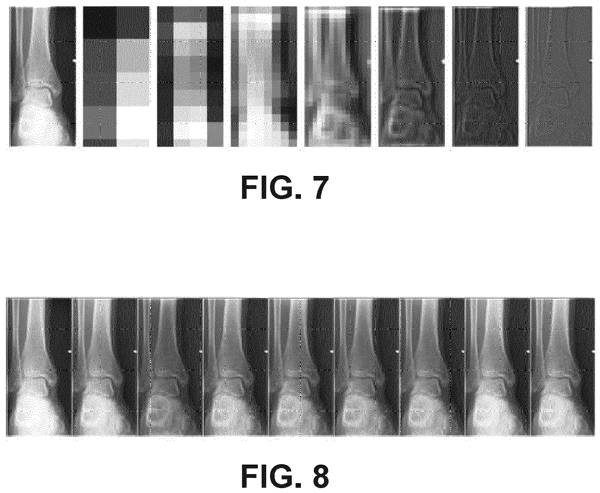

The apparatus for training a medical image analysis algorithm, the medical image generator, the medical image analysis system, the method of training a medical image analysis algorithm, the medical image generation method, the medical image analysis method are further explained in specific detail, where reference is made to Figs. 7-10. Here, the new development is described with respect to the specific example of X-ray image analysis, however the new technique finds applicability for other imaging modalities, such as CT.

The new development described here avoids the need to gather annotated X-ray images of various image styles, which is time-consuming, expensive, or even impossible. This is achieved by means of multi-scale data-augmentation. In this way, an arbitrary number of random, realistic image styles can be fed into the training of the neural network without extra annotation effort - other machine learning algorithms can be utilized. Moreover, also unrealistic (i.e. not naturally prevalent) image styles can be generated in a controlled manner for forcing the neural network to learn meaningful, abstract representations of the input images.

Examples of current image processing can be found for example in the following white papers:

https://www.philips.de/c-dam/b2bhc/master/landing-pages/dynamic-unique/philips-dynamic-unique-white-paper.download.pdf
https://www.philips.com/c-dam/b2bhc/us/Products/Category/radiography/radiography/unique-two-product-overview.pdf

The new technique developed and described here, mimics such image processing as if it was applied with a great variety of different configuration parameters of algorithms such as these. In other words, the new technique provides multi-scale data-augmentation that mimics different post-processing settings and thereby corresponding image styles.

The discussion below, referring to Figs. 7-10, focuses on examples relating to detecting bone contours in ankle-AP X-ray images using supervised learning and a convolutional neural network (e.g. U-Net). Other learning task such as disease / pathology classification or regression tasks (e.g. plane / pose estimation) can benefit from this new development as well. Typically, only a few hundreds of images with annotated bone contours are available for training such that neural networks of large capacity typically tend to overfit to the training data distribution. Mechanisms for overfitting can involve that the neural network memorizes certain training-data noise / texture patterns or that the network implicitly utilizes the image-style(s) of the training data. Applying the trained neural network to unseen images with noise / texture patterns or image-styles being significantly different from the training-data distribution typically leads to poor prediction results. The new technique developed and discussed here, mitigates these issues.

A typical scenario highly prone to this effect is a classification task where the positive training samples are of a different style than the negative training samples and the network happens to learn detecting the style instead of the desired differentiating image features.

To mitigate the poor generalizability, the new technique is based on the following concepts:

Each training image is decomposed into a certain number of scale-components, which are stored in memory. For example, a Laplace pyramid can be used as a scale-hierarchical representation (see Fig. 7 for an illustration). Here, lower (higher) Laplace-pyramid bands compromise larger (smaller) structures in the image.

In each training iteration, the randomly drawn training samples are randomly augmented as follows:

The Laplace bands are randomly modified.

A new image is constructed from the modified Laplace bands using the Laplace-pyramid reconstruction (see Fig. 8- 10).

The corresponding annotations (e.g. bone-contour label masks) are kept invariant.

Various variants of random operations on the Laplace bands are conceivable. The easiest non-trivial variant consists in multiplying each band with a random factor, where the style variability depends on the chosen range of random numbers around unity. Specifically, three sampling variants shall be illustrated here:

Enforcing these random factors to be monotonously increasing with the band index results various ways of enhancing fine and middle-size structures (see Fig. 8) and can be seen as emulating pre-processing given a raw input image.

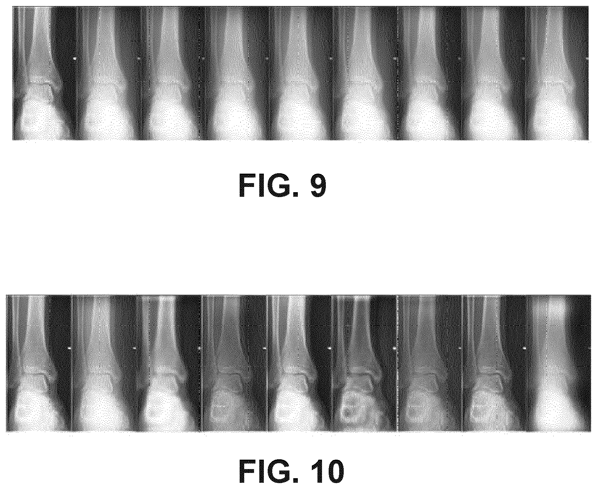

Conversely, enforcing these random factors to be monotonously decreasing with the band index results in various ways of blurring by enhancing mid- and large-scale structures (see Fig. 9). This variant can be regarded as undoing some pre-processing steps of a given pre-processed image.

Finally, not enforcing the random factors to be monotonous results in a zoo of both realistically and artificially appearing images (see Fig. 10). While such artificial modifications may degrade the performance on some tasks, the training may benefit from them in others because the neural network is forced stronger to learn abstract representations / concepts of the images in order to succeed its learning task.

Besides modifying the Laplace bands only by global random factors, more sophisticated approaches are possible such as matching the band histograms of the images to be augmented with the band histogram of randomly drawn reference images (for which no annotation needs to be required).

The following relates to a specific example of image de-composition and re-composition:

The new technique that has been developed is based on decomposing the image into a, in general, over complete set of basis functions which are localized both in space and frequency domain up to certain degree. Then modifying the corresponding expansion coefficients to realize different image styles. Then reconstructing / synthesizing a modified version of the input image. This approach has the advantage that the image contrast can be modified on multiple scales in a controlled manner.

In a specific example the Laplacian image pyramid can be used for constructing such an over complete basis. Given an input image x to be modified, first a Gaussian pyramid is recursively constructed by convolution with a blurring filter B and subsampling every second pixel via the operator D. Taking the input image as the 0-th element of this recursion, $x_3$, the i-th level is constructed as follows:

$$x_i = D\left(B * x_{i-1}\right)$$

where * refers to a convolution. For modifying the image on n scales, the Laplacian pyramid is calculated up to $x_n$ (given that the image is large enough for n-fold sub-sampling). The corresponding elements of the Laplacian pyramid are calculated recursively by up-sampling an element of the Gaussian pyramid as follows:

$$L_i = x_{n-i} - B * \left(U\, x_{n-i+1}\right), \;\; i = 1, ..., n$$

where U denotes up-sampling by inserting zeros in between each pair of neighboring pixels. Given the Gaussian pyramid element corresponding to the largest scale, $x_n$, and the elements of the Laplacian pyramid, $L_1, ..., L_n$, the augmented image can be synthesized recursively:

$$y_i = c_{n-i}\, L_{n-i} + B * \left(U\, y_{i+1}\right), \;\; i = 0, ..., n-1$$

where $y_n = c_0\, x_n$ and $c_0, ..., c_n$ denote a sequence of real random numbers.

The augmented image is then given by $y = y_U$. If all $c_i$ equal unity, the input image is not modified at all, i.e. $y = x$. Randomly drawing the coefficients and the sorting them in increasing (decreasing) order results in an enhancement of small (large) scale contrast, i.e. in a multi-scale sharpening (blurring). If one does not sort the coefficients, a great variety of further image styles can be realized. It is to be noted that the synthesized image depends linearly on the coefficients such that any non-zero coefficients could be used as a global scaling factor by renormalizing the coefficients.

In another exemplary embodiment, a computer program or computer program element is provided that is characterized by being configured to execute the method steps of any of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items recited in the claims. The mere fact that certain measures are re-cited in mutually different dependent claims does not indicate that a combination of these measures cannot be used to advantage. Any reference signs in the claims should not be construed as limiting the scope.

**Claims**

1. An apparatus (10) for training a medical image analysis algorithm, comprising:

   - an input unit (20); and
   - a processing unit (30);

     wherein the input unit is configured to receive a medical image of a body part of a patient;
     wherein the input unit is configured to provide the medical image to the processing unit; wherein the processing unit is configured to generate a modified medical image, wherein the generation comprises a modification of two or more spatial frequency bands associated with the medical image; and
     wherein the processing unit is configured to train a medical image analysis machine learning algorithm comprising utilization of the modified medical image.

2. Apparatus according to claim 1, wherein the processing unit is configured to generate a scaled image set comprising a plurality of scaled images, wherein the generation comprises utilization of the medical image, wherein each scaled image compromises a representation of a spatial frequency in the medical image, and wherein the representation of the spatial frequency in each of the plurality of scaled images is different;

wherein the processing unit is configured to generate a modified scaled image set from the scaled image set, wherein the generation comprises modification of two or more scaled images of the plurality of scaled images; and
wherein the processing unit is configured to generate the modified medical image comprising utilization of the modified scaled image set.

3. Apparatus according to claim 2, wherein modification of the two or more of the plurality of scaled images comprises modification of the representation of the spatial frequency comprised within each of the two or more scaled images.

4. Apparatus according to claim 3, wherein modification of the two or more of the plurality of scaled images comprises modification of the representation of the spatial frequency comprised within each of the two or more scaled images with a random modification factor.

5. Apparatus according to any of claims 2-4, wherein the generation of the modified scaled image set comprises a modification of the plurality of scaled images.

6. Apparatus according to claim 5, wherein the modification of the plurality of scaled images comprises a modification of the representation of the spatial frequency comprised within each of the plurality scaled images with a modification factor that increases with spatial frequency from one scaled image to the next scaled image.

7. Apparatus according to claim 5, wherein the modification of the plurality of scaled images comprises a modification of the representation of the spatial frequency comprised within each of the plurality scaled images with a modification factor that decreases with spatial frequency from one scaled image to the next scaled image.

8. A medical image generator (100), comprising:

- an input unit (120); and
- a processing unit (130);

wherein the input unit is configured to receive a medical image of a body part of a patient;
wherein the input unit is configured to provide the medical image to the processing unit; wherein the processing unit is configured to generate a modified medical image, wherein the generation comprises a modification of two or more spatial frequency bands associated with the medical image.

9. An medical image analysis system (200), comprising:

- an input unit (220); and
- a processing unit (230);

wherein the input unit is configured to receive an examination medical image of a body part of a patient;
wherein the input unit is configured to provide the examination medical image to the processing unit;
wherein, the processing unit is configured to analyse the body part of the patient, and wherein the analysis comprises interrogation of the examination medical image with a trained machine learning algorithm;
wherein, the machine learning algorithm was trained comprising utilization of at least one modified medical image generated by the generator according to claim 8.

10. A method of training a medical image analysis algorithm (300), comprising:

receiving (310) by an input unit a medical image of a body part of a patient;
providing (320) by the input unit the medical image to a processing unit;
generating (330) by the processing unit a modified medical image, wherein the generating comprises a modification of two or more spatial frequency bands associated with the medical image; and
training (340) by the processing unit a medical image analysis machine learning algorithm comprising utilizing the modified medical image.

11. Method according to claim 10, wherein the method comprises:

generating by the processing unit a scaled image set comprising a plurality of scaled images, wherein the generating comprises utilizing the medical image, wherein each scaled image compromises a representation of a spatial frequency in the medical image, and wherein the representation of the spatial frequency in each of the plurality of scaled images is different;
generating by the processing unit a modified scaled image set from the scaled image set, wherein the generating comprises modifying two or more scaled images of the plurality of scaled images; and
generating by the processing unit the modified medical image comprising utilizing the modified scaled image set.

12. A medical image generation method (400), comprising:

receiving (410) by an input unit is configured a medical image of a body part of a patient; and generating (420) by a processing unit a modified medical image, wherein the generating comprises a modification of two or more spatial frequency bands associated with the medical image.

13. Method according to claim 12, wherein the method comprises:

generating by the processing unit a scaled image set comprising a plurality of scaled images, wherein the generating comprises utilizing the medical image, wherein each scaled image compromises a representation of a spatial frequency in the medical image, and wherein the representation of the spatial frequency in each of the plurality of scaled images is different; generating by the processing unit a modified scaled image set from the scaled image set, wherein the generating comprises modifying two or more scaled images of the plurality of scaled images; and generating by the processing unit the modified medical image comprising utilizing the modified scaled image set

14. A medical image analysis method (500), comprising:

receiving (510) by an input unit an examination medical image of a body part of a patient; providing (520) by the input unit the examination medical image to a processing unit; analysing (530) by the processing unit the body part of the patient, and wherein the analysing comprises interrogating the examination medical image with a trained machine learning algorithm; wherein, the machine learning algorithm was trained comprising utilization of at least one modified medical image generated by the method according to claim 13.

15. A computer program element for controlling an apparatus according to any one of claims 1 to 7 and/or a generator according to claim 8 and/or a system according to claim 9, which when executed by a processor is configured to carry out the method of any of claims 10-11 and/or the method of any of claims 12-13 and/or the method of claim 14.

FIG. 1

FIG. 2

FIG. 3

300

310

320

330

340

## FIG. 4

400

410

420

## FIG. 5

500

510

520

530

## FIG. 6

FIG. 7

FIG. 8

FIG. 9

FIG. 10

# EUROPEAN SEARCH REPORT

Europäisches
Patentamt
European
Patent Office
Office européen
des brevets

Application Number

EP 21 19 7744

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PHILIPSEN R H H M ET AL: "Localized Energy-Based Normalization of Medical Images: Application to Chest Radiography", IEEE TRANSACTIONS ON MEDICAL IMAGING, IEEE, USA, vol. 34, no. 9, 1 September 2015 (2015-09-01), pages 1965-1975, XP011667560, ISSN: 0278-0062, DOI: 10.1109/TMI.2015.2418031 [retrieved on 2015-08-28] | 1-3,5, 8-15 | INV. G06T7/00 |
| Y | * abstract; figure 3 * * section IV. EVALUATION DESIGN * | 1-3,5, 9-11,13, 14 | |
| A | | 4,6,7 | |
| | ----- | | |
| Y | CN 111 428 753 A (BEIJING GUODIANTONG NETWORK TECHNOLOGY CO LTD ET AL.) 17 July 2020 (2020-07-17) | 1-3,5, 9-11,13, 14 | |
| A | * abstract; claim 1 * | 4,6,7 | |
| | ----- | | TECHNICAL FIELDS SEARCHED (IPC) |
| Y | CN 111 476 737 A (TENCENT TECH SHENZHEN CO LTD) 31 July 2020 (2020-07-31) | 1-3,5, 9-11,13, 14 | G06T |
| A | * abstract; figure 5 * | 4,6,7 | |
| | ----- | | |
| Y | ZHENLIN XU ET AL: "Robust and Generalizable Visual Representation Learning via Random Convolutions", ARXIV.ORG, CORNELL UNIVERSITY LIBRARY, 201 OLIN LIBRARY CORNELL UNIVERSITY ITHACA, NY 14853, 3 May 2021 (2021-05-03), XP081950381, | 1,9,10, 14 | |
| A | * abstract * * section results of Table 1 * | 4,6,7 | |
| | ----- | | |
| | -/-- | | |

The present search report has been drawn up for all claims

| Place of search | Date of completion of the search | Examiner |
|---|---|---|
| Munich | 1 March 2022 | Rimassa, Simone |

EPO FORM 1503 03.82 (P04C01)

page 1 of 2

Europäisches
Patentamt

European
Patent Office

Office européen
des brevets

## EUROPEAN SEARCH REPORT

**Application Number**

**EP 21 19 7744**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHIH-GU HUANG ET AL: "Fast Mesh Data Augmentation via Chebyshev Polynomial of Spectral filtering", ARXIV.ORG, CORNELL UNIVERSITY LIBRARY, 201 OLIN LIBRARY CORNELL UNIVERSITY ITHACA, NY 14853, 6 October 2020 (2020-10-06), XP081779646, * page 2, left-hand column * ----- | 1,8-10, 12,14,15 | |

TECHNICAL FIELDS
SEARCHED    (IPC)

The present search report has been drawn up for all claims

| Place of search | Date of completion of the search | Examiner |
|---|---|---|
| Munich | 1 March 2022 | Rimassa, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 21 19 7744**

This annex lists the patent family members relating to the patent documents cited in the above-mentioned European search report.
The members are as contained in the European Patent Office EDP file on
The European Patent Office is in no way liable for these particulars which are merely given for the purpose of information.

**01-03-2022**

| Patent document cited in search report | | Publication date | Patent family member(s) | | Publication date |
|---|---|---|---|---|---|
| CN 111428753 | A | 17-07-2020 | NONE | | |
| CN 111476737 | A | 31-07-2020 | CN | 111476737 A | 31-07-2020 |
| | | | WO | 2021208600 A1 | 21-10-2021 |

For more details about this annex : see Official Journal of the European Patent Office, No. 12/82